# EUROPEAN PATENT APPLICATION

(11) **EP 1 011 209 A1**
(43) Date of publication of application: **21.06.2000**
(21) Application number: 98310369.8
(22) Date of filing: 17.12.1998
(51) Int. Cl.: H04B 7/185, H04Q 7/36

(54) **Cell selection in mobile radio communication system according to reception quality**

(71) Applicant: ICO Services Ltd., London W6 9BN (GB)
(72) Inventor: Hungerford, Keith Norman Guy, Balmain, NSW 2041 (AU)
(74) Representative: Read, Matthew Charles

(57) **Abstract**

In a satellite telecommunications system, a mobile user terminal (4a) selects the cell through which a communications channel is to be provided on the basis of power measurements on a BCCH broadcast channel associated with each cell. Inaccuracies associated with the power setting process can cause the user terminal to select a cell through which communications are not supportable. By increasing the transmitted BCCH power associated with the correct cell, through which communications are supportable, and decreasing the BCCH power in the erroneously selected cell, the user terminal is encouraged to make the correct choice.

## Description

This invention relates to a method of controlling cell selection by a mobile user terminal in a cellular telecommunications system such as a satellite mobile telephone system.

Terrestrial mobile telecommunications systems are well known and a number of different systems have developed which operate according to different standards. These public land mobile networks (PLMNs) may operate according to analog or digital standards. In Europe, much of the Far East and elsewhere, the Global System Mobile (GSM) network has become popular, whereas in the US, the Advanced Mobile Phone Service (AMPS) and the Digital Advanced Mobile Phone System (DAMPS) are in use, and in Japan, the Personal Handiphone System (PHS) and the Personal Digital Communication (PDC) network are used. More recently, proposals have been submitted for a Universal Mobile Telecommunications System (UMTS). These networks are all cellular and land-based with transmitters/receivers which communicate with mobile user terminals.

Considering, for example, the GSM system, individual cells of the PLMN are served by a series of geographically spaced, terrestrial base station subsystems (BSS) which each comprise a number of transceiver stations (BTS) coupled through a base station controller (BSC) to a mobile switching centre (MSC) which may provide a gateway out of the network to a conventional public switched telephone network (PSTN). The PLMN includes a home location register (HLR) which stores information about the subscribers to the system and their user terminals. In general, a GSM customer has a subscription relationship with a single PLMN, referred to herein as the home network of the subscriber. When a user terminal is switched on, it registers with the home network HLR. If the user roams to a different GSM network, the user terminal registers with a visitor location register (VLR) of the visited network, which communicates with the HLR of the home network for authentication, routing and other purposes. DAMPS, PHS and PDC networks have a generally similar architecture.

The user terminal is operable in an idle mode when no call is being made, and a so-called dedicated mode for the duration of a call. The call is routed to the subscriber's user terminal through the MSC, to the BSC and then to the selected BTS, which provides a full duplex channel to the user terminal. The channel comprises a downlink channel from the BTS to the user terminal and an uplink channel from the user terminal to the BTS. The channels include time division multiple access (TDMA) time slots on frequencies in a hopping sequence allocated on initiation of the call.

In a GSM system, the call is directed over a dedicated traffic channel or TCH. Each TCH has an associated slow rate control channel or SACCH, and the two channels together are referred to herein as TCH/SACCH. These channels are described in more detail on pp 195 - 201 of "The GSM System for Mobile Communications" by M. Mouly and M-B. Pautet, 1992 Cell & Sys, ISBN: 2-9507190-0-7.

In addition to the dedicated channels, a number of common channels are provided for all user terminals within a particular cell. A broadcast control channel BCCH is broadcast from the BTS to all user terminals within a particular cell, and provides information that identifies the cell to each user terminal. The BCCH is received by the user terminal in the idle mode i.e. when no call is being made. Each cell has its own BCCH, so the relative signal strengths of the BCCHs at the user terminal can be used to determine which cell can best be used for TCH/SACCH communication with the user terminal. Other system information may be transmitted to the user terminals of a particular cell in the BCCH. In addition, a random access channel RACH is provided. This is an "uplink" unidirectional channel from the user terminal to the BTS, and allows mobile stations to transmit their access requests to the network, choosing their transmission time in a random manner.

A number of different mobile telecommunication systems have been proposed that use satellite communication links to the mobile user terminals. One network known as the IRIDIUM™ satellite cellular system and described in, for example, EP-A-0 365 885 and US Patent No. 5 394 561 (Motorola), makes use of a constellation of so-called low earth orbit (LEO) satellites, that have an orbital height of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km. Reference is directed to the ICO™ satellite cellular system described for example in GB-A-2 295 296. With this system, the satellite communications link does not permit communication between adjacent satellites. Instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM. Also simpler satellite communication techniques can be used than with a LEO network. Reference is directed to "New Satellites for Personal Communications", Scientific American, April 1998, pp. 60 - 67, for an overview of LEO/MEO satellite networks.

In satellite communication networks, ground stations are located at different sites around the world in order to communicate with the orbiting satellites. In the ICO™ system and others, a visitor location register is associated with each of the satellite ground stations, which maintains a record of the individual user terminals that are making use of the particular ground station.

As with a GSM network, the cells in the ICO™ system are provided with BCCH and RACH common channels to enable the user terminals to make access requests to the ICO™ system as required.

A cellular mobile communication system which allows random access by mobile user terminals needs to include a specification of how a terminal should select a particular cell for access. The choice of cell is important since time delay, doppler shift and interference constraints may mean that support of a dedicated radio resource is not possible if the terminal has not selected the most appropriate cell.

Conventional cell selection techniques use power measurements to determine the optimum cell for access. Typically, this involves selecting the best cell by using a ranking of received signal strengths on a beacon frequency of each cell, such as the BCCH frequency, possibly offset using broadcast information related to the power transmitted from the base station. In GSM based terrestrial cellular systems, a 35 kilometre radius around a base station can typically be accommodated. Terminals which are outside this area cannot be supported.

For terrestrial systems, the signal attenuates as the user moves away from the base station, following an inverse third to fourth power law, so that power levels can be relatively accurately calibrated. However, there remains the possibility that a user terminal will select a sub-optimal cell for access.

In a satellite system, coverage is determined by mapping the coverage pattern of a satellite beam defining a cell to the surface of the earth.

Because power needs to be conserved, the power profile should ideally be flat, falling off rapidly at the edge of the beam. However, due to the limitations of antenna design, 3dB points are typically used to define the edge of a beam. Hence, when compared with a terrestrial cellular system, there will be relatively small variations of signal strength across a beam. In addition, the calibration of equipment in a satellite system is more difficult than that in a terrestrial cellular system.

The above problems contribute to the fact that a mobile user terminal using received signal strength to determine the optimum cell for access in a satellite cellular network will frequently select a cell through which communications are not supportable.

For every received RACH signal, the network determines whether the correct cell has been selected, by using timing and/or doppler measurements on the received RACH to ensure that the frequency and delay values of the signal fall within their respective permitted ranges for that cell. If the user terminal has selected an incorrect cell, the network can simply reject the RACH, without giving any guidance as to the correct cell for access. A more sophisticated response is to provide a parameter with the rejection which explicitly tells the user terminal which cell to select. This requires further processing at the network.

For example, in a satellite network, the position of the user terminal is known to the network using timing and/or doppler measurements. The network also knows the instant position of each beam and its boundaries. If the user terminal selects the RACH in the wrong beam, the network rejects the access attempt and instructs the user terminal to use the correct beam, based on a calculation as to the beam in which the user terminal is actually located. However, the need to perform this calculation after an incorrect selection has been made increases the initial call set-up delay.

The present invention aims to reduce the number of incorrect cell selections made by the user terminal.

In accordance with the invention there is provided a method of controlling cell selection by a user terminal in a cellular telecommunications system, in which the user terminal selects a cell according to its reception quality, comprising controlling the reception quality of a given cell in dependence on a measure of the occurrence of incorrect cell selections by the user terminal.

The cell reception quality can be measured by received signal strength at the user terminal and can be controlled by controlling the transmitted signal power. Advantageously therefore, the cell selection process can be controlled by setting appropriate signal power levels at the transmitter, or, in the case of a satellite system, at the satellite base station.

The method may include initiating an increase in the signal strength of a cell which is designated as the correct cell for access by the user terminal and initiating a decrease in the signal strength of a cell which is designated as an incorrect cell for access by the user terminal.

A corresponding decrease in signal strength may be applied in a cell adjacent to a cell in which the signal strength has been increased, so as to maintain a constant overall transmitted power.

The reception quality of a given cell may be determined by measuring the reception quality of a cell broadcast channel, such as the BCCH, associated with the cell.

A change in the cell reception quality may be initiated when the measure of incorrect cell selections exceeds a predetermined threshold which may comprise an absolute level (N1) of incorrect cell selections or a ratio (N1/N2) of incorrect cell selections (N1) to correct cell selections (N2).

According to a further aspect of the invention, there is provided a cellular telecommunications system for controlling cell selection by a user terminal, comprising means for setting a transmission quality for each of a plurality of cells and means for controlling the reception quality of a given cell in dependence on a measure of the occurrence of incorrect cell selections by the user terminal.

There is also provided, in accordance with the invention, a method of operating a cellular telecommunications system, comprising making a measurement of cell reception quality at a user terminal for each of a plurality of cells, so as to determine the cell with the best reception quality, determining the correct cell for use by the user terminal, and in the event said correct cell is not the best reception quality cell, increasing the cell reception quality of the correct cell.

The method may further comprise decreasing the reception quality of the best reception quality cell in the event that said correct cell is not the best reception quality cell.

Advantageously, because the system looks for the fraction or absolute number of RACH attempts which go astray, a beam over an empty zone is not prejudiced by not receiving calls.

Embodiments of the invention will now be described by way of example with reference to the accompanying drawings, in which:
Figure 1 is a schematic diagram of a satellite telecommunications system together with a local, land-based mobile telecommunications system, in accordance with the invention;
Figure 2 shows the satellite beam pattern in the ICO™ satellite mobile telecommunications system;
Figure 3 is a more detailed block diagram of the satellite network of Figure 1a in the vicinity of SAN 1a and the overlapping terrestrial cellular network;
Figure 4 is a schematic diagram of a mobile user terminal;
Figure 5 is a schematic block diagram of the circuits of the user terminal shown in Figure 4;
Figure 6 is a schematic diagram of the processing circuitry at the satellite;
Figure 7 is a schematic diagram of the idealised cell pattern produced by the spot beams of satellites 3a and 3b;
Figure 8 is a table of idle mode BCCH measurements based on the pattern shown in Figure 7;
Figure 9 is the schematic diagram of the cell pattern produced by the spot beams of satellite 3a showing the situation where a beam deviates from its idealised form;
Figure 10 is a table of idle mode BCCH measurements based on the pattern shown in Figure 9; and
Figure 11 illustrates the concept of delay/Doppler position location of a user terminal.

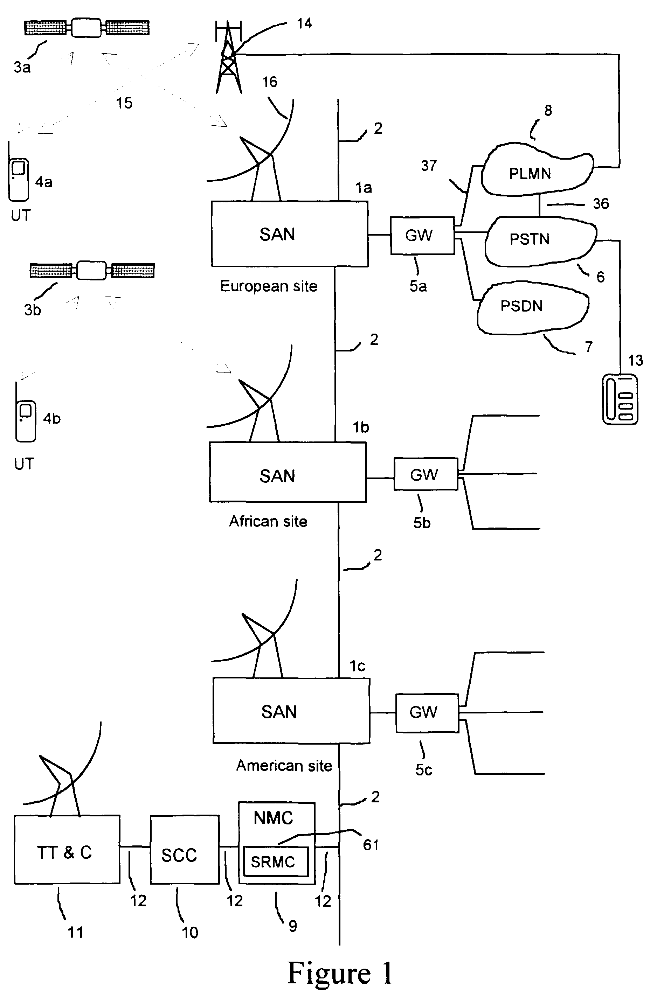

Referring to Figure 1, a satellite mobile telephone system comprises a plurality of satellite access nodes (SAN) 1a, 1b, 1c interconnected by a high capacity digital network 2 ("the backbone network"), a plurality of satellites 3a, 3b, a plurality of user terminals (UT) 4a, 4b, gateways (GW) 5a, 5b, 5c providing connections between the SANs 1a, 1b, 1c and other conventional land-based telephone networks 6, 7, 8, a network management centre (NMC) 9, a satellite control centre (SCC) 10 and a tracking, telemetry and control station (TT&C) 11. The NMC 9, the SCC 10 and the TT&C 11 are interconnected by a lower capacity digital network 12 which is also connected to the backbone network 2. The other land based telephone networks 6, 7, 8 comprise the public switched telephone network (PSTN) 6, which permits connection to be made to a conventional telephone set 13, a public switched data network (PSDN) 7 and a public land mobile network (PLMN) 8.

The SCC 10 and the TT&C 11 control the operation of the satellites 3a, 3b, for instance setting transmit power gains and transponder input tuning, as directed by the NMC 9. Telemetry signals from the satellites 3a, 3b are received by the TT&C 11 and processed by the SCC 10 to ensure that the satellites 3a, 3b are functioning correctly.

As shown in Figure 1, the user terminal UT 4a can also communicate with the conventional land-based mobile network PLMN 8, which includes a transceiver station 14 that establishes a duplex link 15 with the user terminal UT 4a. In this example, the PLMN 8 is a GSM network.

For a fuller understanding of GSM, reference is directed to the various GSM Recommendations issued by the European Telecommunications Institute (ETSI). Also reference is directed to "The GSM System for Mobile Communications" by M. Mouly and M-B. Pautet, 1992 Cell & Sys, 1992, ISBN: 2-9507190-0-7 for a more readable overview.

The satellite network is designed to provide worldwide coverage, so the satellites 3a, 3b form part of a constellation of satellites, which may be arranged in several orbits. In one example, two orbits of five satellites are used, which can be shown to provide coverage of a major part of the surface of the earth, in which for a 10° satellite elevation angle, one satellite can be accessed by a user terminal all of the time and two satellites can be accessed for at least 80% of the time, thereby providing system diversity. Further satellites may be included in the constellation in order to provide additional redundancy and diversity.

The satellites are typically arranged in a medium earth orbit (MEO) constellation, for example with an orbital height of 10,355 km, although the invention is not restricted to a particular orbital height. In this embodiment, satellites 3a, 3b are shown in a common orbit and are tracked by the antenna arrangement 16 of each SAN 1a, 1b, 1c. Typically, each SAN includes four antennas for tracking individual satellites of the constellation, with one spare antenna. The SANs are spaced around the earth in order to provide continuous coverage. In the embodiment shown, SAN 1a may be located in Europe whereas SAN 1b may be located in Africa, SAN 1c in America and other SANs may be located elsewhere. In Figure 1, the SAN 1b is shown communicating with user terminal UT 4b via satellite 3b. For further details of the satellite network, reference is directed to GB-A-2 295 296.

The satellites 3a, 3b are in non-geostationary orbits and comprise generally conventional satellites such as the Hughes HS 601. They may include features disclosed in GB-A-2 288 913. Each satellite 3a, 3b is arranged to generate an array of radio beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network.

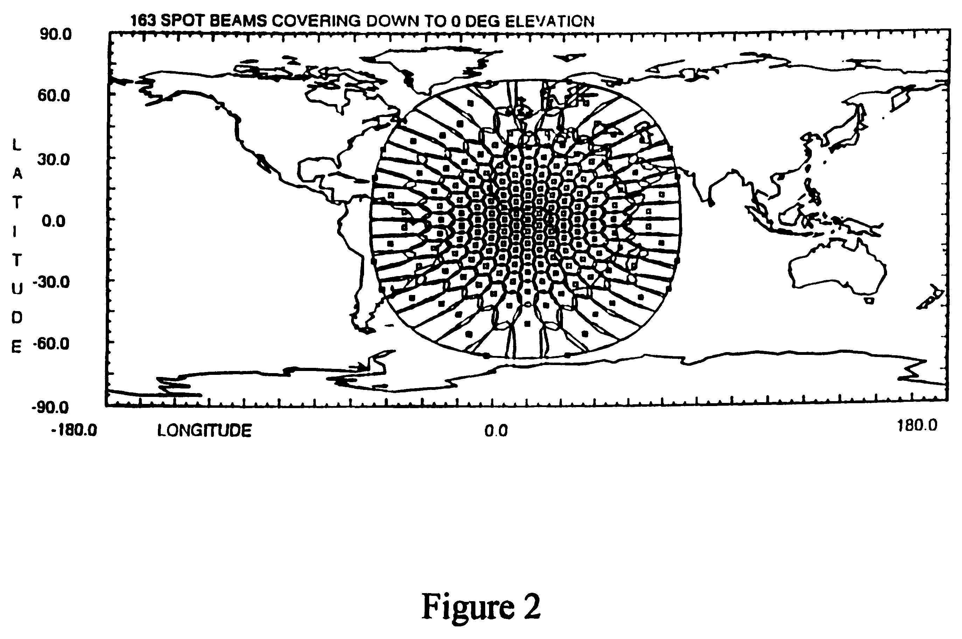

Referring to Figure 2, in the ICO™ system, each satellite 3a, 3b produces a fixed pattern of 163 beams, which move with the satellite over the surface of the Earth.

During a call, the user terminals UT 4a, 4b communicate with the satellite 3a, 3b via a full duplex channel comprising a down link channel and an up link channel. The channels include TDMA time slots on frequencies allocated on initiation of the call or re-allocated during a call.

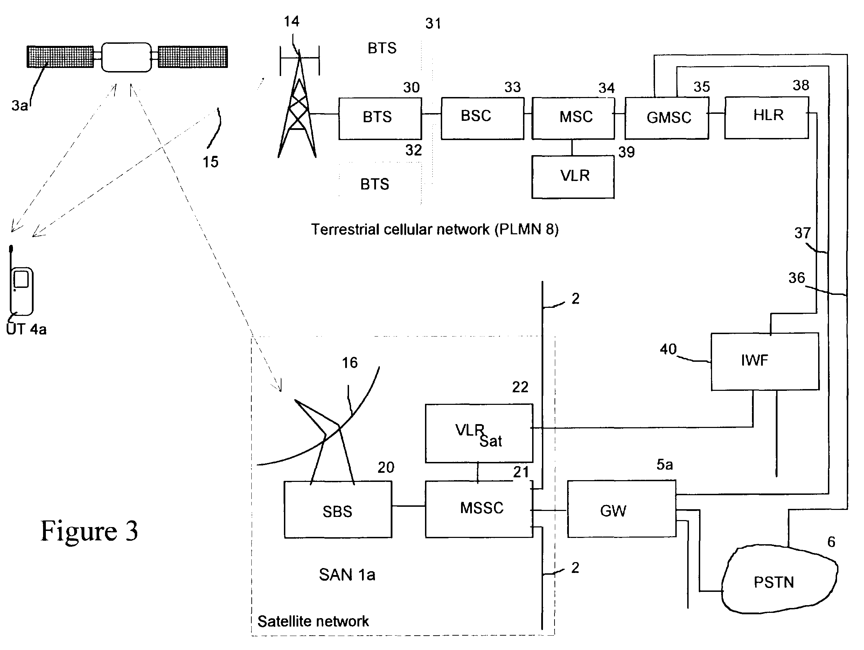

Referring to Figure 3, the configuration of a SAN 1a and the local PLMN 8 is shown in more detail. The SAN 1a consists of a satellite base station SBS 20 which is coupled to the five dish antennas 16 for tracking the satellites, the SBS 20 including transmitter and receiver circuits with amplifiers, multiplexers, demultiplexer and codecs. A mobile satellite switching centre MSSC 21 is coupled to SBS 20 and includes a satellite visitor location register VLR_{SAT} 22. MSSC 21 couples communication signals to the backbone network 2 and to the SBS 20, so as to allow individual calls to be established through the backbone network 2 and the duplex communication link via the satellite 3a, to the mobile terminal UT 4a.

Also, MSSC 21 is connected to the gateway GW 5a so as to provide an output connection to PLMN 8, together with PSDN 7 and PSTN 6 shown in Figure 1. It will be understood that all the SANs are of similar construction with a respective VLR_{SAT} 22 to maintain a record of the subscribers registered.

The MSSC 21 responds to addresses on incoming communication signals from the antennas 16 to route the signals appropriately to their destinations.

The PLMN 8 in this example comprises a UK based GSM network and includes a number of base transceiver stations BTS 30, 31, 32, which are geographically spaced apart in order to support a cellular network in a manner well known *per se*. BTS 30 is shown with an associated antenna 14, connected by a landline to a base station controller BSC 33, it being understood that a plurality of BTSs 30, 31, 32 are connected to the BSC 33 in a manner well known *per se*. The BSC 33 is connected to a mobile switching centre MSC 34 which can route calls within the mobile network and also through a gateway GMSC 35 to a conventional PSTN 6 over line 36, in a manner well known *per se* or to the satellite network, over line 37 through the gateway GW 5a.

A home location register HLR 38 for the land-based network 8 is provided coupled to the GMSC 35. The HLR, in a conventional manner, keeps a record of the IMSIs of the users subscribing to the network 8. A visitor location register VLR 39 maintains a record of subscribers temporarily registered with the network 8. For example, with the PLMN 8 sited in the UK, subscribers to GSM networks in another country e.g. Germany, may be locally registered on a temporary basis whilst in the UK. In a conventional manner, telephone usage information is relayed from the VLR 39 and GMSC 35 to the German network (not shown) for billing purposes. Interconnection of the PLMN to other types of network may be facilitated by the provision of an Interworking function IWF 40 which is configured to adapt GSM transmission peculiarities to those of the connected network.

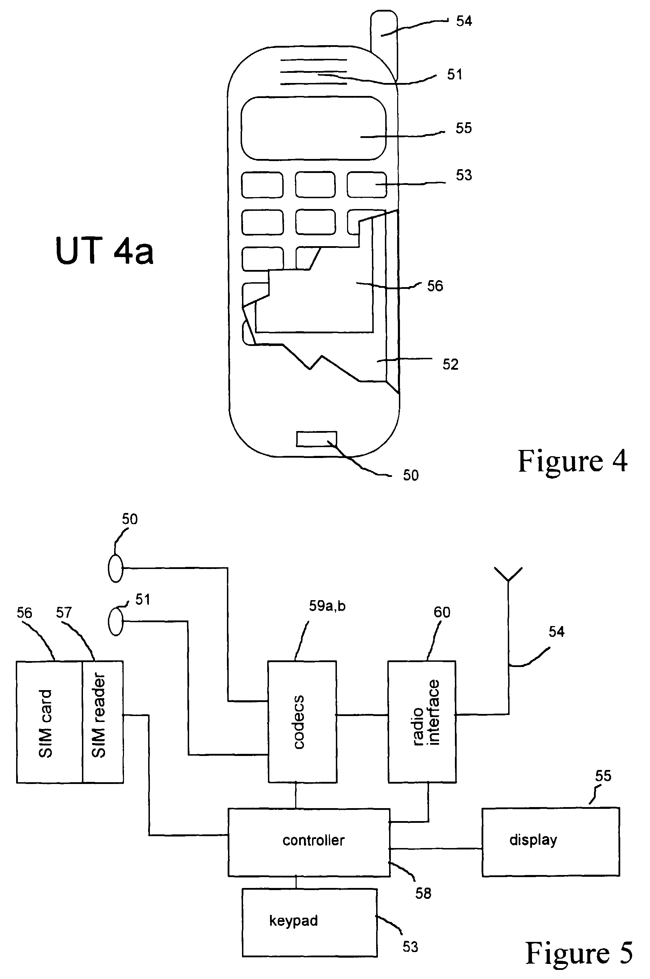

Referring to Figures 4 and 5, the mobile user terminal UT 4a is configured to operate with both the local terrestrial cellular network and the satellite network. Thus, in the example shown in Figure 3, UT 4a can operate either according to a land-based GSM protocol or according to the satellite network protocol. As shown in Figure 4, UT 4a comprises a mobile handset which is capable of dual mode operation. It includes conventional GSM circuits for use with the land-based cellular network 8 together with similar circuitry for use with the satellite network. The handset comprises a microphone 50, a loudspeaker 51, a battery 52, a keypad 53, an antenna 54 and a display 55. The handheld unit UT 4a also includes a subscriber identification module (SIM) 56. This can be either a smart card, having the well-known size of a credit card, or it may be a smaller plug-in module, in accordance with ISO standards. The circuit configuration of the UT 4a is shown in block diagrammatic form in Figure 5. The SIM 56, for example a SIM smart card, is received in an SIM card reader 57 coupled to a controller 58, typically a microprocessor. The microphone and loudspeaker 50, 51 are coupled to first and second codecs 59a, 59b coupled to a conventional radio interface 60 connected to the antenna 54 so as to transmit and receive communication signals, in a manner well known *per se*.

The SIM 56 includes a memory which stores an IMSI, which is used both for the GSM network 8 and the satellite network. The memory also stores an encryption algorithm, an authentication algorithm and an encryption key, for subscription authentication and communication encryption according to the GSM Recommendations *supra*. Thus, the UT 4a can register with either network individually, according to conventional GSM registration techniques, which are well known in the art. For further details of the authentication procedure and subsequent data encryption/decryption, reference is directed to "The GSM System for Mobile Communications" M. Mouly & M-B. Pautet, Cell & Sys.1992 pp 477-492.

As previously described, the satellite and land-based networks may be selected automatically according to user determined criteria. However in this example, for simplicity, the satellite and land-based GSM networks are selected manually by use of a key on the keypad 53. When the GSM network is selected, the controller 58 sets the radio interface 60 to operate at a frequency suitable for the land-based GSM network 8 and codec 59a, suitable for the GSM network, is selected. Alternatively, if the keypad 53 is operated to select the satellite network, the controller 58 operates to configure the radio interface 60 to a frequency and protocol appropriate for the satellite network, and codec 59b is selected, suitable for the satellite network. Thus, when the GSM network is selected, communication takes place over the duplex link 15 shown in Figure 3, whereas when the satellite network is selected, communication takes place over the duplex links via the satellite 3a.

In the case of the ICO™ satellite network, the general configuration of the transmitted signals is similar to those used for conventional GSM transmissions in a PLMN and makes use of a TDMA scheme.

The signal transmission scheme includes channels for providing communication between the UTs individually and one of the SANs via a satellite, together with a number of common channels for all UTs within the cell defined by a particular satellite spot beam.

For speech transmission, data is sent on an individual traffic channel TCH. Each TCH is provided with an associated slow rate control channel or SACCH. It will be understood that the TCH/SACCH is transmitted when the UT is in dedicated mode i.e. during a call.

In addition to the channels TCH/SACCH to the individual UTs, a number of common channels are provided for all UTs within each cell corresponding to one of the satellite's spot beams, which will now be described in more detail.

A broadcast control channel BCCH is broadcast from the satellite to all UTs within a particular cell. The BCCH provides information which identifies the cell to the UT, which is received by the UT in idle mode i.e. when no call is being made. As each cell has its own BCCH, the relative signal strengths of the BCCHs at the UT can be used to determine which cell is to be used for TCH/SACCH communication with the UT. Other system information may be transmitted to the UTs of a particular cell in the BCCH in a similar manner to GSM.

The common channels also include a downlink paging logical channel PCH. This is used to transmit paging messages to a UT, for example to alert the user of the UT to an incoming call. Also an access grant logical channel AGCH indicates to the UT a channel allocated by the network, to be accessed by the UT for speech communication (TCH/SACCH) in order to receive the incoming call.

In addition to these downlink common channels, there is an uplink common channel which allows UTs within a cell to transmit access requests to the network, when it is desired to make a call from the UT or in response to a paging message received on a PCH channel when a third party wishes to make a call to the UT. This channel is called the random access channel RACH.

The common channels are transmitted on beacon frequencies for the cell concerned such that BCCH and PCH/AGCH are transmitted from the satellite on frequencies *f1* and *f2* respectively, and RACH is transmitted from the UT to the satellite on *f3*. Adjacent cells have different beacon frequencies to distinguish them from one another.

The power at which the BCCH signal is to be transmitted by the satellite is set at the SBS 20, subject to the gain of the satellite transponder which is set via the TT&C 11. The levels of the BCCHs are, for example, planned centrally at a satellite resource management centre SRMC 61, which can be located at the NMC 9.

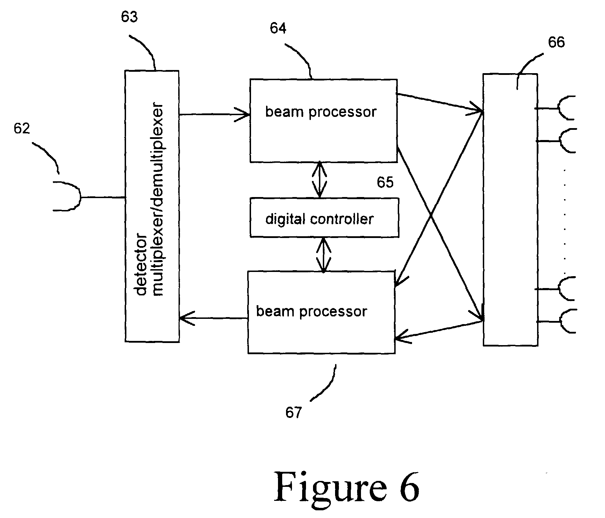

A schematic diagram of the major signal processing components of the satellite is shown in Figure 6. Multiplexed signalling and traffic channels transmitted from the SBS 20 are received by an antenna 62 and directed to multiplexer/demultiplexer circuitry 63 where they are demultiplexed into individual channels. To ensure that each beam contains the appropriate channels and frequencies for communication with user terminals on the surface of the Earth, the channels are passed to beam processing circuitry 64 under the control of a digital controller 65, which receives commands from the SBS 20 corresponding to the plans developed at the SRMC 61, including BCCH power levels for each beam. The TT&C 11 separately sets the gain for the satellite transponder. The beam processing circuitry 64 assembles the individual channels under the control of the digital controller 65 into multiplexed signals which are fed to a direct radiating antenna 66, which produces the array of spot beams for the mobile link as previously described.

For signals on the uplink from the individual UTs to the SBS 20, the various transmissions including RACH are received by the antenna 66 and directed to beam processing circuitry 67 which combines the various channels and passed them to the multiplexer configuration in circuitry 63 for transmission through the antenna 62 to the SBS 20.

It will be understood that the foregoing description of the satellite circuitry is schematic and for further details, reference is directed to GB-A-2 288 913.

In the following, the procedures leading to the setting up of a telephone call between telephone set 13 and UT 4a through SAN 1a and satellite 3a will be considered in more detail.

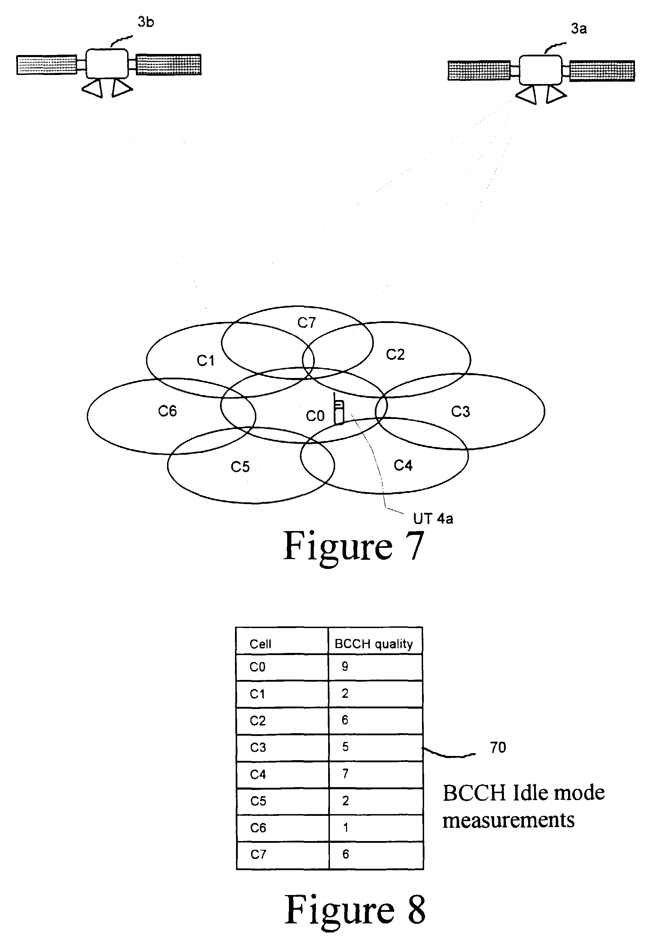

Figure 7 shows an idealised example of cells C0 - C6 produced by the footprints of seven of the 163 spot beams from the satellite 3a, as well as cell C7 from another satellite 3b. Initially, the user terminal is assumed to lie within the cell C0 and C0 is assumed to be the correct cell for the UT to use to access the system, ie. by using cell C0, factors such as signal delays to the satellite and doppler shifts in signal frequencies lie within predetermined limits, so that the system will receive the UT's RACH request, and subject to the availability of sufficient capacity, will be able to allocate a traffic channel TCH/SACCH to the UT. In contrast, choice of an incorrect cell will result in the system being either unable to allocate a valid traffic channel in response to the RACH request, or, even if a traffic channel can be validly allocated, contact using that channel will be brief.

Prior to commencement of a call, the user terminal UT 4a monitors, in the idle mode, the BCCHs of cell C0 and the surrounding cells, and builds up a table 70 of the received signal reception quality, as shown in Figure 8. The UT is provided with the details of the beacon frequencies of the BCCHs of adjacent cells C1 - C7 in a BCCH message for cell C0 so that it can locate the BCCHs for the adjacent cells. Each BCCH contains data which identifies the cell concerned, and also the satellite that is producing the corresponding spot beam. In the table 70 of Figure 8, the signal qualities as received by the UT 4a for each of the monitored cells C0 - C7 are shown schematically on a scale of 1 to 10. The signal qualities may be measured in terms of a bit error rate as in GSM, signal strength or any other suitable parameter. The table of received BCCH signal quality is held in a memory of the controller 58 in the UT shown in Figure 5.

When a call is initiated by the UT 4a, it sends a RACH request to the SBS 20 in a prescribed TDMA time slot on a prescribed RACH carrier frequency. The SBS 20 allocates a particular TCH/SACCH for the call. The UT is informed of the allocated TCH/SACCH by a message on AGCH. The UT monitors the AGCH for this information after the issuance of a RACH message so that it can tune to the appropriate TCH/SACCH for the call.

If the call is initiated from the telephone set 13, a signal is sent from SAN 1 on the paging channel PCH to trigger the UT 4a to send a RACH in order to request a TCH/SACCH, which is then acquired in the same way as a UT initiated call, namely by the UT listening to the AGCH so as to determine details of the TCH/SACCH allocated by the network for the call.

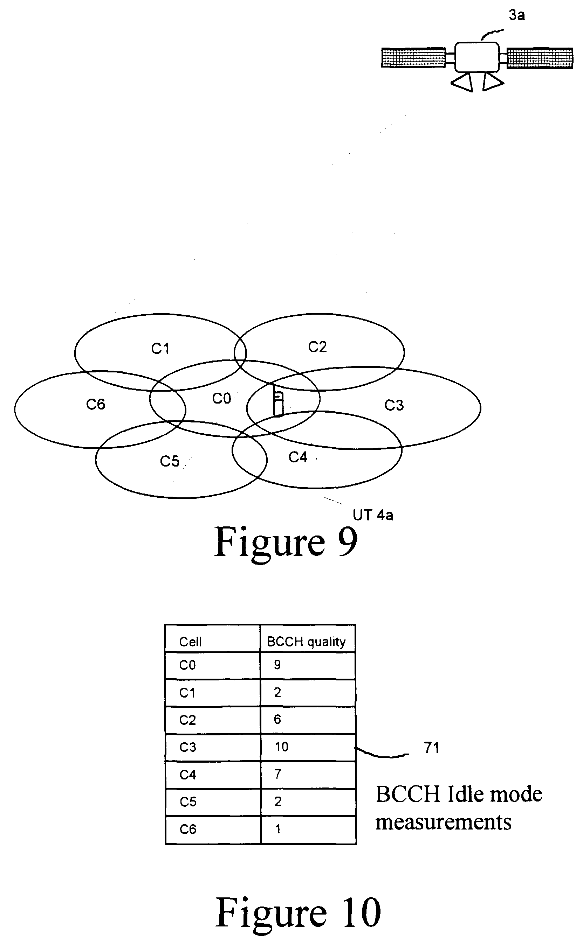

However, referring to Figure 9, the actual shapes of and overlap between the beams is likely to be considerably more irregular in practice than shown in Figure 7. In Figure 9, the beam from the second satellite 3b is omitted for clarity. Figure 9 illustrates that due to, for example, error margins in the equipment for setting the BCCH power at the satellite 3a, and factors such as the slow roll-off of the transmitted power across a beam, the cell C3 may overlap with cell C0 to a considerable extent. In this case, even though C0 remains the correct cell for the UT to use to send a RACH message, the BCCH idle mode measurements erroneously indicate that the UT should use cell C3, as indicated in the table 71 in Figure 10 by the higher value of signal strength for C3 in relation to C0. However, when the UT sends a RACH message via cell C3, the system determines from frequency and delay offsets in the RACH, as described in detail below, that it is unable to provide a TCH/SACCH allocation to the UT, since this would, for example, violate TDMA timing and doppler shift constraints on the TDMA signal structure.

For example, because of the extent of each spot beam from the satellite, the one way path delay tₚ for a signal travelling between a satellite 3a and a user terminal varies between t_{p min} at the edge of the beam nearest the satellite nadir and t_{p max} the edge furthest from the nadir.

To achieve timing synchronisation between the satellite and the UT, the UT derives its time origin from a particular BCCH or PCH burst. Assuming the UT transmits a RACH burst at a time offset tₖ after the receipt of the preceding BCCH burst, then the SBS 20 expects the RACH burst to arrive at the satellite in a time window of between 2t_{p min} + tₖ and 2t_{p max} + tₖ, relative to the time the BCCH burst is sent. If the RACH burst arrives outside these limits, the SBS 20 denies resources to the UT on the basis that the UT lies outside the nominal beam boundaries and is therefore using the wrong beam.

To avoid the need to keep records of t_{p min} and t_{p max} for each beam, the SBS 20 holds a nominal path delay t_{z} for each beam, with t_{p min} and t_{p max} being defined as offsets from t_{z}. For example, t_{p min} and t_{p max} are defined to lie 1.4ms on either side of t_{z}, so that where the SBS 20 calculates the magnitude of the offset tₚ - t_{z} as exceeding 1.4ms, the UT is deemed to be outside the cell boundary.

In a similar way, each beam has a permitted range of frequency offsets from a nominal frequency f_{z}.

For example, assuming that the UT selects cell C3 when it is actually located in cell C0, as shown in Figures 7 and 9, the RACH burst will arrive at the satellite somewhat later than expected, since the path delay tₚ to the UT in cell C0 exceeds t_{p max 3}, the maximum permitted delay for cell C3, and therefore the offset tₚ - t_{z3}, where t_{z3} is the nominal path delay to beam C3, is greater than permitted. Therefore, the SBS 20 will not allocate resources to the UT in cell C3.

In this case, the SBS 20 instructs the UT to use the next best cell from its cell list, which, in this example, is the correct cell C0.

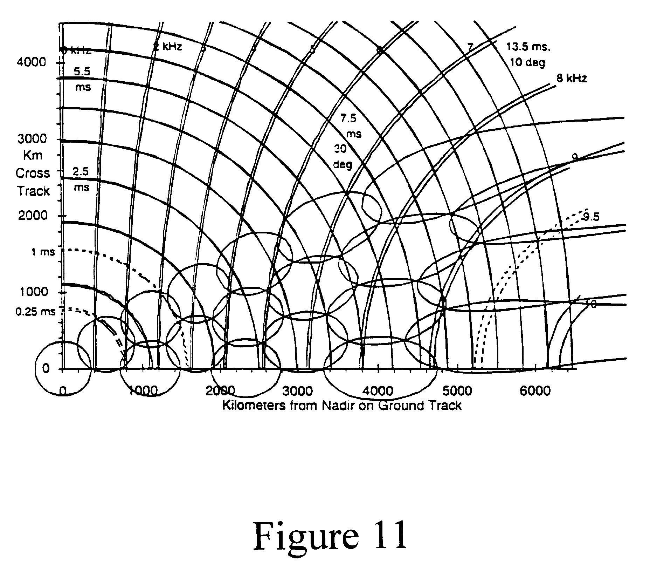

To prevent a second incorrect access request, the system can, rather than instructing the UT to use the next best cell, indicate the correct cell to the UT. This is done by the SBS 20 calculating the position of the UT from the received RACH message using conventional delay and frequency shift measurements and comparing this position with its knowledge of the position of the beam pattern, so as to determine the correct beam. For example, Figure 11 shows the concept of delay/Doppler position location. Constant Doppler contours on Earth are shown at 1kHz intervals and constant path delay contours at 1ms intervals superimposed onto a beam pattern. The intersection of two contours determines UT position. All the contours are double lines, separated by representative errors of +/-10µs delay and +/-30Hz Doppler error. There is a high probability that the position of the UT lies inside the parallelogram at the #-shaped double-contour intersections. Although delay/Doppler data alone gives ambiguous UT positions within all four quadrants, only one of which is shown in Figure 11, the true position can be resolved by knowing which beam the UT is in or is apparently in.

In accordance with the invention, the SBS 20 keeps a running record (N1) of incorrect RACH attempts, and a running record (N2) of correct RACH attempts for each beam. When any of the N1 values reaches a predetermined threshold, the SBS 20 directs the satellite to decrease the power of the BCCH in the relevant beam by a predetermined amount, for example 0.25dB, as previously described. The SBS 20 also selects an adjacent beam with a lower N1 value, for example, the adjacent beam with the lowest N1 value, and instructs the satellite to increase its BCCH power by a corresponding amount.

This action can also be triggered by the ratio N1/N2 exceeding a predetermined threshold. The value threshold (N1 alone) and ratio threshold (N1/N2) may be operated simultaneously, so that the action is taken if either threshold is exceeded, or only one of them may be used. The value of the threshold will vary depending on the position of the beams over the Earth and the position of the UT within the beam array.

If the condition persists, the power in the adjacent beam can be continually turned up and that in the wrongly accessed beam continually turned down until the situation rectifies itself.

For example, the SBS 20 keeps a record N1_{C0} and N2_{C0} denoting the number of incorrect and correct RACH attempts respectively in a beam C0. Similarly, the SBS 20 keeps a record N1_{C3} and N2_{C3} denoting the number of incorrect and correct RACH attempts respectively in a beam C3.

Assuming the situation shown in Figures 9 and 10, where beam C3 is being repeatedly incorrectly accessed because of its overbroad extent, then N1_{C3} increases until it exceeds a pre-defined threshold, at which point the power in beam C3 is turned down by 0.25dB while the power in the adjacent beam C0 with the lower value of N1_{C0} is turned up by 0.25dB. This causes the BCCH quality measurements for C0 and C3, shown in Figure 10, to change so that C0 has a higher quality measurement than C3, causing the UT to select C0 on its next access attempt.

In the event that an adjustment of 0.25dB does not sufficiently alter the quality measurements, then further incorrect accesses will cause a further change in power levels, so that for example the BCCH in beam C0 is turned up by a total of 0.5dB and that in beam C3 turned down by 0.5dB. If the condition persists, the power of the BCCH in beam C0 can be continually turned up and that in C3 continually turned down until the situation rectifies itself. However, this process will inevitably affect RACH attempts from UTs located in other beams. For example, when the BCCH power in beam C0 is increased by 0.5dB, the apparent extent of beam C0 will increase so that it is likely to encroach on other beams, such as beam C2 shown in Figure 10. In this case, a UT physically located within beam C2 will begin to make incorrect access attempts through beam C0. As a consequence, the level N1_{C0} will rise, and when it reaches a particular threshold, the BCCH power in beam C0 will be turned down, while the BCCH power in beam C2 will be turned up.

On this basis, an equilibrium point will be reached where an acceptable level of incorrect RACH requests for each beam C0, C2, C3 is produced.

If the power control subsystem tends to instability, then the amounts by which the power in each beam is altered can be varied, for example, changing in steps of 0.125dB rather than 0.25dB until convergence is achieved.

Further, the process of tuning the BCCH power in each beam can be performed over a plurality of beams, for example, C0 - C7, or over all of the beams that are actively receiving calls, so that as the beams move over the surface of the Earth, the BCCH power levels continually self-tune, so as to minimise the number of incorrect RACH attempts.

While the invention has been described with reference to particular types of threshold, other algorithms could be used to calculate the threshold, for example the threshold could be based on the number of incorrect access attempts out of the total number of access attempts. Further, the need to turn down the beam power in an adjacent beam when turning up the beam power in a correct beam is designed to maintain the overall satellite EIRP and is not essential in the absence of specific power constraints or in a scheme in which overall beam power is otherwise controlled.

Although for the sake of convenient explanation, the term "mobile" has been used to denote the user terminals UT, it should be understood that this term is not restricted to hand-held or portable terminals but includes for example terminals to be mounted on marine vessels or aircraft, or in terrestrial vehicles. Also, it is possible to practise the invention with some of the terminals UT being completely or at least partially immobile.

## Claims

1. A method of controlling cell selection by a user terminal (4a) in a cellular telecommunications system, in which the user terminal selects a cell according to its reception quality, comprising controlling the reception quality of a given cell in dependence on a measure of the occurrence of incorrect cell selections by the user terminal.

2. A method according to claim 1, wherein the cell reception quality is measured by received signal strength at the user terminal.

3. A method according to claim 2, comprising controlling the cell reception quality by controlling the transmitted signal power.

4. A method according to claim 2 or 3, comprising initiating an increase in the signal strength of a cell which is designated as the correct cell for access by the user terminal.

5. A method according to any one of claims 2 to 4, including initiating a decrease in the signal strength of a cell which is designated as an incorrect cell for access by the user terminal.

6. A method according to claim 4 or 5, comprising compensating for an increase in signal strength in a given cell by initiating a corresponding decrease in signal strength in a cell adjacent to the given cell, so as to maintain a constant overall transmitted power.

7. A method according to claim 6, wherein the adjacent cell comprises a cell which has been incorrectly selected for access by the user terminal in place of the given cell.

8. A method according to any one of the preceding claims, wherein the reception quality of a given cell is determined by measuring the reception quality of a cell broadcast channel associated with the cell.

9. A method according to any one of the preceding claims, comprising initiating a change in the cell reception quality when the measure of incorrect cell selections exceeds a predetermined threshold.

10. A method according to any one of the preceding claims, comprising performing said method for each of a plurality of cells in the cellular system.

11. A method according to any preceding claim, wherein the measure of the occurrence of incorrect cell selections comprises an absolute level (N1) of incorrect cell selections.

12. A method according to any one of claims 1 to 10, wherein the measure of the occurrence of incorrect cell selections comprises a ratio (N1/N2) of incorrect cell selections (N1) to correct cell selections (N2).

13. A method according to any one of the preceding claims, wherein the cell reception quality is measured by bit error rate.

14. A method according to any one of the preceding claims, comprising a satellite mobile telephone system having a plurality of cells defined by a plurality of satellite beams from one or more satellites.

15. A cellular telecommunications system for controlling cell selection by a user terminal, comprising means for setting a transmission quality for each of a plurality of cells and means for controlling the reception quality of a given cell in dependence on a measure of the occurrence of incorrect cell selections by the user terminal.

16. A system according to claim 15, including means for determining the cell selected by the user terminal.

17. A system according to claim 15 or 16, comprising means for providing a broadcast channel to be associated with each cell.

18. A system according to claim 17, configured for continuous self-tuning of the broadcast channel transmitted power levels.

19. A method of operating a cellular telecommunications system, comprising the steps of:
making a measurement of cell reception quality at a user terminal for each of a plurality of cells, so as to determine the cell with the best reception quality;
determining the correct cell for use by the user terminal, and in the event that said correct cell is not the best reception quality cell, increasing the cell reception quality of the correct cell.

20. A method according to claim 19, further comprising decreasing the reception quality of the best reception quality cell in the event that said correct cell is not the best reception quality cell.
